Europäisches Patentamt

European Patent Office

Office européen des brevets

(19)

(11) Veröffentlichungsnummer : **0 086 977**
**B1**

(12) # EUROPÄISCHE PATENTSCHRIFT

(45) Veröffentlichungstag der Patentschrift :
07.08.85

(51) Int. Cl.⁴ : **B 29 C 59/10, H 01 T 19/00**

(21) Anmeldenummer : 83100663.0

(22) Anmeldetag : 26.01.83

(54) Verfahren und Vorrichtung zur Oberflächenbehandlung von Folienbahnen mittels elektrischer Coronaentladung.

(30) Priorität : 04.02.82 DE 3203806

(43) Veröffentlichungstag der Anmeldung :
31.08.83 Patentblatt 83/35

(45) Bekanntmachung des Hinweises auf die Patenterteilung : 07.08.85 Patentblatt 85/32

(84) Benannte Vertragsstaaten :
DE FR GB SE

(56) Entgegenhaltungen :
EP-A- 0 010 632
EP-A- 0 036 363
AT-B- 256 451
DE-A- 2 556 228
DE-A- 2 753 711
DE-A- 2 753 750
DE-A- 2 754 425
DE-A- 2 816 856
DE-B- 1 779 023
DE-B- 2 540 681

(73) Patentinhaber : HOECHST AKTIENGESELLSCHAFT
Postfach 80 03 20
D-6230 Frankfurt am Main 80 (DE)

(72) Erfinder : Dinter, Peter
Am Wiesenberg 4
D-6227 Hallgarten (DE)
Erfinder : Kolbe, Andreas
Am Hohen Stein 8
D-6200 Wiesbaden (DE)

**Beschreibung**

Die vorliegende Erfindung betrifft ein Verfahren zur kontinuierlichen einseitigen Oberflächenbehandlung einer Folienbahn mittels elektrischer Coronaentladungen, gemäß dem Oberbegriff von Anspruch 1, sowie Vorrichtungen zur Durchführung dieses Verfahrens.

Bei der Verarbeitung von Folien und bei der Verbundfolienherstellung zählt die Oberflächenbehandlung mittels einer Coronaentladung zwecks Bedruckbarmachung bzw. Steigerung von Verbundfestigkeiten zum Stand der Technik.

Die Funktionsweise dieser Verfahren sieht das Führen des zu behandelnden Filmes über eine elektrisch geerdete Stützfläche, z. B. eine Walze, eine Trommel oder ein endloses Band sowie die Beaufschlagung der Stützfläche abgewandten Seite des Filmes mit einer elektrischen Coronaentladung, die durch die Speisung einer im Abstand zur Stützfläche angeordneten Elektrode mit einem hochfrequenten Wechselstrom hoher Spannung erzeugt wird, vor.

Nach diesem Grundprinzip arbeitende Verfahren sowie Vorrichtungen zur Durchführung dieser Verfahren werden mit all ihren Vor- und Nachteilen sehr ausführlich in der DE-A-27 53 750 ( ≙ EP-B-0 002 453, ≙ US-A-4 239 973) diskutiert, die es sich zur Aufgabe gemacht hat, eine im Aufbau technisch einfache Coronaeinrichtung zu schaffen, die schnell repariert werden kann und mit der bei hohen Folienlaufgeschwindigkeiten hohe Energiedichten für den Entladungsvorgang erzielt werden können.

Diese Aufgabe wird auch durch die angegebenen Maßnahmen zufriedenstellend gelöst, jedoch kennt jeder mit der elektrischen Coronavorbehandlung von Materialbahnen, insbesondere Kunststoffolien, vertraute Fachmann das Problem des Rückseiteneffektes. Ursache für diesen unerwünschten und äußerst störenden Effekt, der durch eine ungewollte Behandlung der Bahnrückseite zustandekommt und sich durch ungünstige Haft- und Gleiteigenschaften der Bahnen beim Auf- und Abwickeln, bzw. Schichten, bemerkbar macht, ist die nicht vollständige Auflage der Materialbahn auf der Behandlungswalze. Neben Oberflächendefekten des Walzenbelages (Löcher, Poren, Druckstellen, Kratzer) führt vor allem Lufteinzug zwischen Behandlungswalze und Folienbahn zum Rückseiteneffekt ; dieses besonders bei schnellaufenden, sehr breiten Anlagen, wo die eingeschlossene Luft nicht mehr zu den Bahnrändern hin abströmen kann.

Zur Lösung des genannten Problemes sind verschiedene Wege eingeschlagen worden.

In der DE-B-15 04 661 bedient man sich hierbei z. B. eines elektrostatischen Anlegeverfahrens. Dabei wird die Folienbahn im Bereich der Auflauflinie auf die Walze von einer Drahtelektrode, die von einem Generator mit einer hohen Gleichspannung gespeist wird, elektrostatisch aufgeladen und so an die Walzenoberfläche angelegt.

Diese Methode funktioniert aber nur dann problemlos, wenn die Walze aus metallischem Werkstoff besteht. Da jedoch Coronawalzen funktionsbedingt Überzüge aus dielektrischen Materialien besitzen, läßt sich das in der DE-B vorgeschlagene Verfahren nicht zufriedenstellend zur Anwendung bringen.

Ein weiteres, in der DE-A-16 29 540 beschriebenes Verfahren nutzt die unterschiedliche Aktivierbarkeit von Gasen im elektrischen Feld zur Vermeidung der Rückseitenbehandlung. Hierbei wird zwischen die Folienbahn und die Coronawalze einerseits ein schwer aktivierbares Gas, z. B. Stickstoff, Helium, Argon, Neon, geblasen, während die zu behandelnde Folienseite mit einem leicht zu aktivierenden Gas, z. B. Sauerstoff, beaufschlagt wird. Der unzweifelhaft hohe technische Aufwand sowie die laufenden Betriebskosten (z. B. Gasverbrauch) stehen einer breiteren Nutzung dieses Verfahrens entgegen.

Alternativ zu den genannten Methoden kann selbstverständlich auch der Einsatz von Gummiandrückwalzen oder Luftdüsen, die die Folienbahn mit der Walze in Kontakt bringen, in Erwägung gezogen werden.

Während man mit Luftdüsen, selbst bei Anwendung sehr hoher Luftdrücke, nur eine unzureichende Anlegung erzielt, und zudem, um die Folie nicht mit Staubpartikeln zu beaufschlagen, aufwendige Filtrierverfahren für die Blasluft anwenden muß, besteht bei der Anwendung von Kontaktwalzen die Gefahr des Einbügelns von Falten in die Folienbahn.

Der vorliegenden Anmeldung liegt somit die Aufgabe zugrunde, ein Verfahren zur Oberflächenbehandlung von Folienbahnen mittels elektrischer Coronaentladungen in der Weise auszubilden, daß bei gleichzeitig hohen Folienlaufgeschwindigkeiten und hohen Energiedichten für den Entladungsvorgang, wie sie im Stand der Technik erzielt werden, die Ergebnisse dieser Behandlung auf eine einzige Oberfläche beschränkt werden ; weiterhin ist es Aufgabe der Erfindung, eine Vorrichtung bereitzustellen, die mit technisch einfachem Aufbau die Durchführung dieses Verfahrens ermöglicht.

Gelöst wird diese Aufgabe durch ein Verfahren, wie es im Anspruch 1 beschrieben ist sowie durch die im Anspruch 3 beschriebenen Vorrichtungsmerkmale.

Weitere Ausgestaltungen sind im Anspruch 2 bzw. in den Ansprüchen 4 bis 7 enthalten.

Das Wesentliche der gegenständlichen Erfindung ist darin zu sehen, daß die Walzenelektrode mit einer Vielzahl von Durchbohrungen versehen ist und im Innern der Hohlachse ein Vakuum erzeugt wird. Während einerseits die Evakuierung einer Hohlwalze keine absolut außergewöhnliche Maßnahme darstellt. wird auf der anderen Seite jeder Fachmann davor zurückschrecken, eine absichtliche Beschädigung oder gar Durchbohrung einer Walzenelektrode für die Coronabehandlung von Folienbahnen vorzunehmen, denn ausgehend vom Funktionsprinzip konventioneller Coronasysteme, bei denen schon jede Verletzung der Dielektrikumsschicht der Walzenelektrode gleichbedeutend ist mit deren Funktionsversagen, stellt die Durchbohrung der Walzenelektrode zweifellos die Überwindung eines beachtlichen Vorurteiles dar. Es muß daher als ein umso überraschenderes Ergebnis angesehen werden, daß mit den erfindungsgemäßen Durchbohrungen der Walzenelektrode technisch so wertvolle Ergebnisse erzielt werden können. Die Durchbohrungen können allerdings nicht wahllos über die gesamte Oberfläche der Walzenelektrode verteilt sein, sondern sie müssen genau zwischen den Elektroden angeordnet sein.

In der einfachsten Ausführungsform der Erfindung wird die Walzenelektrode, wie in der DE-A-27 53 750 beschrieben, aus einem äußeren und einem darin eng anliegenden inneren Rohr gebildet, welche beide aus dielektrischem Material bestehen und zwischen denen sich die Einzelelektroden in Form von bevorzugt dünnen metallischen Drähten von etwa 0,2 bis 0,5 mm Durchmesser befinden. Bedingt durch die zwangsläufig zwischen dem äußeren und dem darin eingepaßten inneren Rohr entstehende Trennfuge besteht hierbei allerdings die Gefahr, daß sich in den dielektrikumsfreien Kanälen, gebildet durch die Durchbohrungen selbst und die durchbohrten Trennfugen, Kriechströme ausbilden können, welche zu Kurzschlüssen in der Anlage führen. Es ist daher zweckmäßig, in dieser Ausführungsform die Durchbohrungen seitlich gegen die Elektroden mit einer Isolierschicht zu versehen. Dies geschieht durch Auskleiden oder Ausziehen der Durchbohrungen mit einem dielektrischen Material. Es kann dies dasselbe Material sein, aus dem die Walzenelektrode selbst schon besteht, es können aber auch andere dielektrische Materialien verwendet werden, wie Epoxidharze, Silikonharze, Phenolharze, Silikongummi und ähnliche.

In der bevorzugten Ausführungsform der Erfindung bilden das äußere und das innere Rohr der Walzenelektrode eine einstückige untrennbare Einheit, wobei die Einzelelektroden im Innern der Rohrwandung aus dielektrischem Material angeordnet sind. Dies wird durch ein spezielles Herstellungsverfahren, dem « Filament-winding-Verfahren » erreicht. Hierbei wird zunächst das dielektrische Material auf ein Trägerelement aufgebracht, -gewickelt oder -geschichtet. Das Trägerelement soll zylindrisch ausgebildet sein und es soll, nachdem das dielektrische Material erstarrt ist, wieder entfernt werden können, bevorzugt benutzt man dazu einen Wickeldorn. Als dielektrische Materialien kommen in Frage Glasfaser, phenol- oder melaminharzgetränkte Papiere, glasfaserverstärkte Epoxid- oder Silikonharze, Polyester oder Polycabonate, die alle eine relativ kratzfeste Oberfläche aufweisen.

Auf eine innere Lage aus gewickeltem oder geschichtetem dielektrischem Material der Dicke, die dem inneren Rohr entspricht, werden in noch weichem und verformbarem Zustand des Materials die Elektroden aufgebracht, bevorzugt in Form von dünnen Drähten, und darauf wird dann unmittelbar die äußere Lage aus ebenfalls dielektrischem Material in einer Dicke, die dem äußeren Rohr entspricht, gewickelt oder geschichtet. Das dielektrische Material wird dann bei der dem jeweiligen Material entsprechenden Aushärttemperatur gehärtet und nach der Aushärtung von dem Trägerelement entfernt.

Die Durchbohrungen weisen einen Durchmesser auf von 0,1 bis 3 mm, bevorzugt von 0,5 bis 2,5 mm auf. Trotz intensivster Behandlung der Folienoberseite konnte bei solchermaßen gestalteten Durchbohrungen keine Behandlung der Rückseite festgestellt werden. Die Wirksamkeit der luftfreien Kontaktierung der Folienbahn an die Walzenelektrode ist abhängig vom Bohrungsdurchmesser, vom Abstand und der Anzahl der Durchbohrungen sowie von dem angelegten Vakuum.

Das Vakuum kann erzeugt werden durch den Anschluß der Saugseite einer Pumpe oder eines Ventilators an die Hohlachse der Walzenelektrode. Mit dem zusätzlichen Einbau von zwei sich axial zur Längsachse der Walzenelektrode erstreckenden Trennwänden kann das Vakuum auf ein Teilvolumen des gesamten Walzenkörpers beschränkt werden. Die so geschaffene Vakuumkammer wird im Walzenkörper dermaßen angeordnet, daß sie in dem Bereich der Walzenelektrode ein Vakuum erzeugt, der durch die Folienbahn umschlungen wird und auf dem die Behandlung der Folie durch Coronaentladung stattfindet.

Die erfindungsgemäße Vorrichtung und ihre Wirkungsweise wird nun anhand der folgenden Figuren näher erläutert, ohne daß jedoch eine Einschränkung hierauf bestehen soll.

Figur 1 zeigt einen Querschnitt gemäß Schnittlinien A-A der Figur 2.

Figur 2 stellt einen Schnitt in Achsrichtung durch die erfindungsgemäße Apparatur dar.

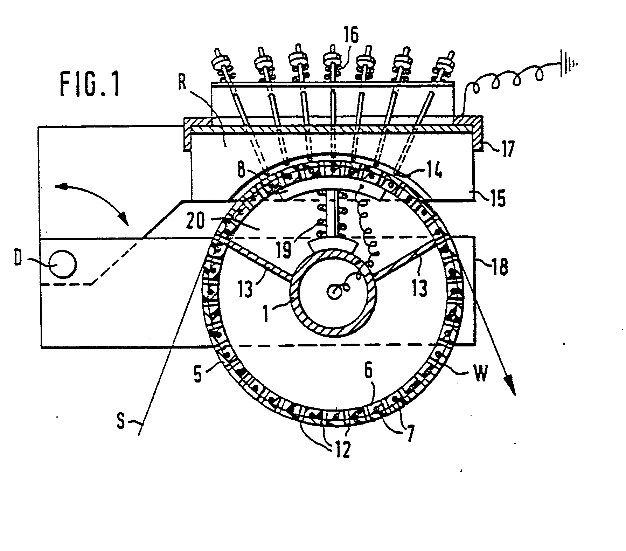

In bevorzugter Ausführung besteht die erfindungsgemäße Coronaanlage, wie der Figur 1 zu entnehmen ist, im wesentlichen zunächst aus einem als Elektrode fungierenden, gleichzeitig der Führung des zu behandelnden Substrates S dienenden, zylindrischen, aus dielektrischem Material bestehenden Walzenkörper W, der aus zwei im Filament-winding-Verfahren in zwei aufeinanderfolgenden Schritten, untrennbar aufeinandergewickelten Rohren 5 und 6 gebildet wird sowie einem darüber um den Drehpunkt D schwenkbar angeordneten, die geerdeten Gegenelektroden 14 aufnehmenden Rahmen R. Beim Transport des Substrates S über den Walzenkörper W wird die dem rotierenden Walzenkörper abgewandte Oberfläche des Substrates S von der zwischen den Elektroden 7, die in dem dielektrischen Material der aufeinandergewickelten Rohre 5 und 6 angeordnet sind, und den äußeren, geerdeten Gegenelektroden 14 gezündeten, elektrischen Coronaentladung behandelt.

Die nicht zu behandelnde Seite des Substrates wird durch die Durchbohrungen 12 von dem Vakuum angesaugt, welches sich in der Vakuumkammer 20 befindet, die vom Restvolumen der Hohlwalze durch die Trennwände 13 abgetrennt ist. Es wird so ein luftfreier Kontakt zwischen Substrat und Walzenoberfläche erzeugt.

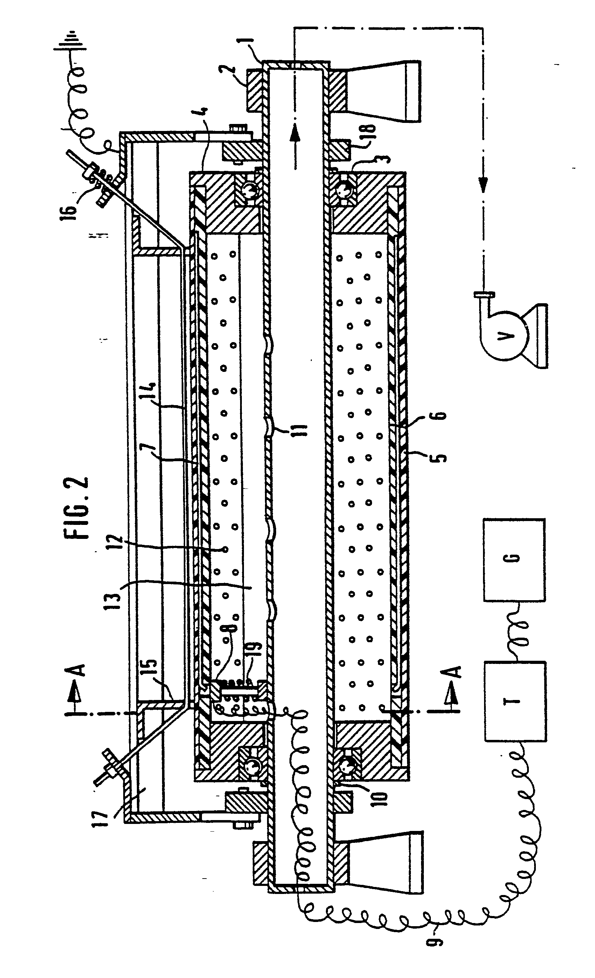

Anhand des in Figur 2 dargestellten Längsschnittes wird der konstruktive Aufbau der erfindungsgemäßen Vorrichtung weiter verdeutlicht. So besteht die Walzenelektrode aus einer feststehenden, in den Lagerarmen 2 gelagerten Achse 1. Auf der Achse 1 sind im Abstand zwei in Kugellagern 3 um die Achse 1 rotierbar gelagerte zylindrische Abschlußstücke 4 aus dielektrischem Werkstoff aufgezogen, die ein aus einem dielektrischen Material hergestelltes, zylindrisches Rohr, bestehend aus zwei im Filamentwinding-Verfahren in zwei aufeinanderfolgenden Schritten, untrennbar aufeinandergewickelten Rohren 5 und 6 tragen. Im Innern der Rohrwandung aus dielektrischem Material sind die Elektroden 7 angeordnet.

Zwischen den Elektroden befinden sich die Durchbohrungen 12, durch welche die für die Rückseitenbehandlung verantwortliche Luft zwischen Substrat und Walzenoberfläche in die Vakuumkammer 20 abgesaugt wird. Über den segmentartig ausgebildeten Schleifkontakt 8 sowie die Zuleitung 9 werden die Elektroden 7, bevorzugt dünne metallische Drähte von etwa 0,2 bis 0,5 mm Dicke, von einem Generator G mit einem hochfrequenten, im Transformator T hochgespannten Wechselstrom beaufschlagt. Gegen axiale Verschiebung ist der komplette Walzenkörper durch Spannringe 10 gesichert. Der Schleifkontakt 8 wird durch eine Feder 19 gegen die Elektroden gedrückt. Um das Vakuum in der Vakuumkammer zu erzeugen, wird mit Hilfe einer Pumpe oder eines Ventilators V im einfachsten Falle die Luft, durch die Achse 1 abgeführt, die durch die radialen Verteilerbohrungen 11 mit der Vakuumkammer 20 in Verbindung steht.

Über der beschriebenen Walzenelektrode ist die notwendige Gegenelektrode angeordnet. Es handelt sich hierbei ebenfalls um dünne metallische Drähte 14, die zur Walzenelektrode einen Abstand von bevorzugt etwa 1 bis 2 mm aufweisen. In ihrer Lage zur Walzenelektrode fixiert sind die Drähte 14 durch die dem Radius des Walzenkörpers angepaßten Segmentscheiben 15. Druckfedern 16 erzeugen die erforderliche Vorspannung und kompensieren die wärmebedingten Längenausdehnungen und Durchhänge. Aufgehängt sind die Gegenelektroden in einem Rahmenteil 17, der zwecks besseren Einführens des zu behandelnden Substrates um den Drehpunkt D schwenkbar bzw. aufklappbar ist. Das Rahmenteil 18 dagegen ist fest mit der Achse 1 verbunden.

## Patentansprüche

1. Verfahren zur kontinuierlichen einseitigen Oberflächenbehandlung einer Folienbahn (S) mittels elektrischer Coronaentladungen, bei dem die in Richtung ihrer Längsachse bewegte Folienbahn (S) zwischen mindestens einer geerdeten Elektrode (14) und einer in Bewegung befindlichen polarisierten Oberfläche hindurchgeführt wird, wobei die nicht zu behandelnde Seite der Folienbahn (S) auf der in Bewegung befindlichen Oberfläche (W) aufliegt, dadurch gekennzeichnet, daß durch Evakuieren ein luftfreier Kontakt zwischen der Folienbahn (S) und der in Bewegung befindlichen polarisierten Oberfläche (W) erzeugt wird.

2. Verfahren nach Anspruch 1, dadurch gekennzeichnet, daß das Evakuieren durch die in Bewegung befindliche, polarisierte Oberfläche (W) hindurch geschieht.

3. Vorrichtung zur Durchführung des Verfahrens nach einem der Ansprüche 1 oder 2, bestehend aus wenigstens einer Walzenelektrode (W), wenigstens einer dieser zugeordneten geerdeten Gegenelektrode (14) sowie einem mit dieser Walzenelektrode (W) über eine Zuleitung verbundenen Generator (G) zur Erzeugung einer Wechselspannung, bevorzugt in hochfrequenter Form, wobei die geerdeten Gegenelektroden (14) in bekannter Weise als Spitzenelektroden in Form von Kämmen, Messern, Zähnen, bevorzugt jedoch dünnen Drähten, ausgebildet sind und wobei die Walzenelektrode (W) aus einer zentralen Hohlachse (1), welche auf ihrer Oberfläche Öffnungen (11) aufweist, zwei an der Hohlachse (1) zentrisch befestigten Abschlußstücken (4), die über Lager (3) mit der Hohlachse (1) drehbar verbunden sind, einem von den Abschlußstücken (4) gestützten äußeren Rohr (5) aus dielektrischem Material, welchem ein inneres Rohr (6) aus ebenfalls dielektrischem Material eng anliegend eingepaßt ist, das auf seiner Oberseite mehrere über den Umfang gleichmäßig verteilte Einzelelektroden (7) trägt, von denen jeweils eine Gruppe über einen Schleifkontakt (8) und über eine Zuleitung (9) mit dem Transformator (T) und dem Generator (G) in Verbindung steht und auf gleichem Potential liegt sowie einem Lagerarm (2), der die Hohlachse (1) haltert, besteht, dadurch gekennzeichnet, daß das äußere und das innere Rohr (5/6) der Walzenelektrode (W) eine Vielzahl von zwischen den Einzelektroden (7) angeordneten Durchbohrungen (12) aufweisen und daß eine Einheit (V) zur Erzeugung eines Unterdruckes im Bereich zwischen Folienbahn (S) und dem äußeren Rohr (5) der Walzenelektrode (W) an einer oder an beiden Stirnseiten der zentralen Hohlachse (1) angeschlossen ist.

4. Vorrichtung nach Anspruch 3, dadurch gekennzeichnet, daß in der Walzenelektrode (W) zwischen der Hohlachse (1) und dem inneren Rohr (6) eine abgetrennte Vakuumkammer (20) angeordnet ist, wobei die Trennwände (13) an dem äußeren Umfang der Hohlachse (1) befestigt sind und an der inneren Oberfläche des inneren Rohres (6) anliegen.

5. Vorrichtung nach Anspruch 4, dadurch gekennzeichnet, daß die innere Oberfläche des inneren Rohres (6), welche eine Wand der Vakuumkammer (20) bildet, der äußeren Oberfläche des äußeren Rohres (5) gestaltlich entspricht, auf der die Folienbahn (S) aufliegt.

6. Vorrichtung nach einem der Ansprüche 3 bis 5, dadurch gekennzeichnet, daß der Durchmesser der in der Walzenelektrode (W) befindlichen Durchbohrungen (12) 0,1 bis 3 mm beträgt.

7. Vorrichtung nach einem der Ansprüche 3 bis 6, dadurch gekennzeichnet, daß das äußere Rohr (5) und das innere Rohr (6) der Walzenelektrode (W) eine einstückige untrennbare Einheit bilden, welche aus dielektrischem Material besteht, wobei die Einzelelektroden (7) in festem Abstand zur Walzenoberfläche in dem dielektrischen Material angeordnet sind.

## Claims

1. Process for the continuous, single-sided surface treatment of a film web (S) by means of electric corona discharge, in which the film web (S) moved in the direction of its longitudinal axis is passed between at least one grounded electrode (14) and a moving, polarized surface (W), whereby the surface of the film web (S), which is not to be treated, rests on the moving surface, characterized in that by evacuation an air-free contact is produced between the film web (S) and the moving polarized surface (W).

2. Process as claimed in Claim 1, characterized in that the evacuation is effected through the moving, polarized surface (W).

3. Device for performing the process as claimed in any of Claims 1 or 2, composed of at least one roller electrode (W) at least one grounded counter electrode (14) arranged in relation to the roller electrode, and a generator (G) producing an A.C., preferably of high frequency, and being connected with the roller electrode (W) via a feed line, whereby the grounded counter electrodes (14) are designed, in known manner, as point electrodes having the shape of combs, knives, teeth or, preferably, thin wires, and the roller electrode (W) comprises a central hollow axle (1) with apertures (11) on its surface, two end pieces (4) centrally mounted to the hollow axle (1) and rotatably connected therewith via bearings (3), an outer tube (5) made of a dielectric material and supported by the end pieces (4) and containing in its cavity an immediately adjacent inner tube (6) also made of a dielectric material, on the surface of which a plurality of regularly distributed individual electrodes (7) are provided, several of which, which are of the same potential, are each connected to the transformer (T) and generator (G) via a slip contact (8) and a feed line (9), and a bearing bracket (2) supporting the hollow axle (1), said device being characterized in that the outer and the inner tube (5, 6) of the roller electrode (W) are provided with a number of perforations (12) located between the individual electrodes (7) and that a means (V) for producing a vacuum in the area between the film web (S) and the outer tube (5) of the roller electrode (W) is connected to one or to the two front sides of the central hollow axle (1).

4. Device as claimed in Claim 3, characterized in that a separate suction chamber (20) is provided in the roller electrode (W) between the hollow axle (1) and the inner tube (6) whereby the separating walls (13) are fastened to the outer circumference of the hollow axle (1) and abut against the inner surface of the inner tube (6).

5. Device as claimed in Claim 4, characterized in that the shape of the inner surface of the inner tube (6) forming one wall of the suction chamber (20) corresponds to that part of the outer surface of the outer tube (5), on which the film web (S) rests.

6. Device as claimed in any of Claims 3 to 5, characterized in that the perforations (12) provided in the roller electrode (W) have a diameter of between 0.1 and 3 mm.

7. Device as claimed in any of Claims 3 to 6, characterized in that the outer tube (5) and the inner tube (6) of the roller electrode (W) form a single-piece, inseparable unit of a dielectric material, the individual electrodes (7) being arranged in said material at a defined distance from the roller surface.

## Revendications

1. Procédé pour réaliser le traitement continu d'une face d'une bande continue (S) au moyen de décharges électriques par effet couronne, selon lequel la bande continue (S) entraînée suivant la direction de son axe longitudinal passe entre au moins une électrode (14) mise à la terre et une surface polarisée (W) en déplacement, la face ne devant pas être traitée de la bande continue (S) étant en appui sur la surface (W) en déplacement, caractérisé en ce qu'un contact sans air est établi, par création d'un vide, entre la bande continue (S) et la surface polarisée (W) en déplacement.

2. Procédé selon la revendication 1, caractérisé en ce que l'établissement du vide est réalisé à travers la surface polarisée (W) en déplacement.

3. Dispositif pour la mise en œuvre du procédé selon l'une des revendications 1 ou 2, constitué par au moins une électrode en forme de cylindre (W), au moins une contre-électrode (14) mise à la terre et associée à cette électrode ainsi qu'un générateur (G) relié à cette électrode en forme de cylindre (W) par l'intermédiaire d'une ligne d'alimentation et servant à produire une tension alternative, de préférence sous une forme à haute fréquence, et dans lequel les contre-électrodes (14) mises à la terre sont constituées de façon connue d'électrodes pointues sous la forme de peignes, de couteaux, de dents, et de préférence sous la forme de fils minces, et dans lequel l'électrode en forme de cylindre (W) est constituée par un axe creux central (1), qui comporte des ouvertures (11) réparties sur sa surface, par deux embouts terminaux (4) fixés de façon centrée sur l'axe creux (1) et qui sont reliés de façon à pouvoir tourner par l'intermédiaire de deux paliers (3), à l'axe creux (1), par un tube extérieur (5) soutenu par les embouts terminaux (4) et constitué en un matériau diélectrique et contre lequel est appliqué d'une manière étroitement adaptée un tube intérieur (6) constitué également en un matériau diélectrique, et qui porte, sur sa face supérieure, plusieurs électrodes individuelles (7) réparties uniformément sur le pourtour et dont respectivement un groupe est relié par l'intermédiaire d'un contact glissant (8) et par l'intermédiaire d'une ligne d'alimentation (9) au transformateur (T) et au générateur (G) et est placé au même potentiel, ainsi que par un bras de support (2) qui soutient l'axe creux (1), caractérisé en ce que le tube extérieur et le tube intérieur (5, 6) de l'électrode en forme de cylindre (W) possèdent une multiplicité de perçages (12) disposés entre les électrodes individuelles (7) et qu'une unité (V) servant à produire une dépression dans la zone située entre la bande continue (S) et le tube extérieur (5) de l'électrode en forme de cylindre (W) est raccordé à une face frontale ou aux deux faces frontales de l'axe creux central (1).

4. Dispositif selon la revendication 3, caractérisé en ce que dans l'électrode en forme de cylindre (W) et entre l'axe creux (1) et le tube intérieur (6) se trouve disposée une chambre à vide séparée (20), les parois de séparation (13) étant fixées sur le pourtour extérieur de l'axe creux (1) et étant appliquées contre la surface intérieur du tube intérieur (6).

5. Dispositif selon la revendication 4, caractérisé en ce que la surface intérieure du tube intérieur (6), qui forme une paroi de la chambre à vide (20), possède une forme correspondant à la surface extérieure du tube extérieur (5) sur lequel la bande continue (S) est en appui.

6. Dispositif selon l'une des revendications 3 à 5, caractérisé en ce que le diamètre des perçages (12) situés dans l'électrode en forme de cylindre (W) possède une valeur comprise entre 0,1 et 3 mm.

7. Dispositif suivant l'une des revendications 3 à 6, caractérisé en ce que le tube extérieur (5) et le tube intérieur (6) de l'électrode en forme de cylindre (W) forment une unité d'un seul tenant indissociable qui est constituée en un matériau diélectrique, les électrodes individuelles (7) étant disposées à une distance fixe par rapport à la surface du cylindre, dans le matériau diélectrique.

FIG.1

FIG. 2